# EUROPEAN PATENT SPECIFICATION

(11) **EP 2 599 380 B1**
(45) Date of publication and mention of the grant of the patent: **13.09.2017**
(21) Application number: 12194909.3
(22) Date of filing: 29.11.2012
(51) Int. Cl.: A01G 1/06

(54) **Automatic plant grafting machine**
Automatische Pflanzenpropfungsmaschine
Machine de greffage automatique de plantes

(30) Priority: 29.11.2011 IT RE20110105
(43) Date of publication of application: 05.06.2013
(73) Proprietor: Trea S.A.S. di Carretti Alfeo E C., 42121 Reggio Emilia (IT)
(72) Inventor: Carretti, Alfeo, 42121 Reggio Emilia (IT); Saccani, Manuel, 42121 Reggio Emilia (IT)
(74) Representative: Corradini, Corrado

(56) References cited:
- EP-A1- 2 116 126
- WO-A1-2011/107943
- WO-A2-2011/064426
- JP-A- 8 023 772

## Description

The present invention generally regards plant grafting, and in particular a machine that allows performing a quick and efficient grafting.

Grafting is a method used for propagating plants by joining the rootstock, i.e. the lower part of a first plant which comprises the root system, and scion, i.e. the upper part of a second plant.

The grafting operation is obtained by joining to the rootstock the graft, i.e. a part of the scion consisting in a piece of stem, branch or a bud, with the aim of creating only one plant.

Grafting is an agronomic activity commonly used in agriculture in that it allows improving the resistance of the plant against diseases, vigorousness, robustness and, above all, productivity.

A known grafting method provides for performing a cut on an inclined plane with respect to the axis of the stem, to increase the contact surface between the two stems and closely positioning the two cut stems (rootstock and scion). Contact is guaranteed by a special per se known binding element. The prior art comprises various devices for automatically performing the grafting described above.

The known devices comprise a first gripper adapted to receive and lock the stem of the first plant, and a second gripper adapted to receive and lock the stem of the second plant.

To each of said grippers there is associated a blade, or another cutting means, for cutting the stem.

Each of the grippers is associated to moveable support means adapted to make the surfaces of the cut stems fit perfectly, in a manner such to provide the grafting.

There are known devices in which each gripper is arranged on a slide, the two slides being moveable on parallel paths, in a manner such that the grippers can position the stems in a first position in which they are parallel and distant, in which the cutting is carried out, and in a second position in which they are aligned with the cutting surfaces placed in contact.

There are also known devices in which each gripper is supported by an arm which can oscillate about an axis parallel to the oscillation axis of the arm which carries the other gripper, between a position in which the stems are parallel and distant and a position in which they are aligned with the cutting surfaces placed in contact.

In the known devices the grippers move on different planes, orthogonal to the axis of the stems supported by the grippers. An automatic grafting machine is known from document WO-A-2011/064426. In all said devices the cutting blades are arranged on the same plane arranged between the planes in which the grippers move.

The two plants subject of the grafting are arranged on the grippers of the device oriented in the same manner, i.e. parallel with respect to each other and with the leaves oriented in the same direction. After cutting, the two stubs of the stems are faced and misaligned in the space between the grippers, and the movement of the grippers aligns the stubs and fits the two cutting surfaces placing them in contact, in the grafting position. The known devices also provide for the manual or automatic application of a binding element which keeps the two stubs (rootstock and scion) of the stems joined in contact. There are other known devices, in which only the cutting of the rootstock and the scion which, in these cases, are held by the operator and not by special supports, is carried out automatically.

All the known devices have the characteristic that the mutual movement of the stems and of the stubs occurs in the direction orthogonal to the axis of the stems.

This not only complicates the aligning, but also the perfect contact between the cutting surfaces, which being inclined with respect to the axis of the stems are approached in a direction that is not orthogonal to the cutting plane.

This makes the two stubs, or half-stems, not to be perfectly aligned, or the cutting surfaces are not perfectly in contact, to the detriment of the good result of the operation.

A second drawback lies in the fact that, in the known devices, the stem is locked by the gripper in only one point and the cutting blade operates at a given distance from the gripper. Hence, the axis of the stem is not always in the same position during cutting, but it can also be slightly inclined. An erroneous orientation of the stem leads to the cutting being carried out incorrectly, i.e. with the correct inclination, and in the due position given that the action of the blade tends to bend the stem during the cutting. This drawback is more frequent in plant grafts whose stem has a small diameter. A further, but not less serious drawback, of the known devices lies in the fact that the blades may transmit agents harmful for the health of the plants, transferring them from one plant to the subsequent one.

The present invention aims at eliminating the aforementioned drawbacks through a simple, inexpensive and rational solution also suitable to increase the production capacity of the machine.

This object is attained by a machine having the characteristics outlined in the independent claim.

In particular the invention provides an automatic grafting machine comprising a base supporting a first and a second device, each device comprising a cradle adapted to receive a stem of a plant, said cradle having a slot adapted to receive a blade for cutting the stem.

Due to the use of a cradle the stem remains still in position during cutting, guaranteeing that the cutting is always accurate, with the correct inclination and in the due position. A further advantage lies in the fact that during the cutting the blade, being inserted in the slot of the cradle, operates in a protected position guaranteeing the safety of the operator.

The dependent claims refer to subordinate characteristics adapted to improve the overall performance of the invention.

The advantages as well as the construction and functional characteristics of the invention will be outlined by the detailed description that follows, which with reference to the attached drawings, illustrates a preferred detailed embodiment provided by way of non-limiting examples.
Fig 1 shows the invention in perspective view in a first operating position.

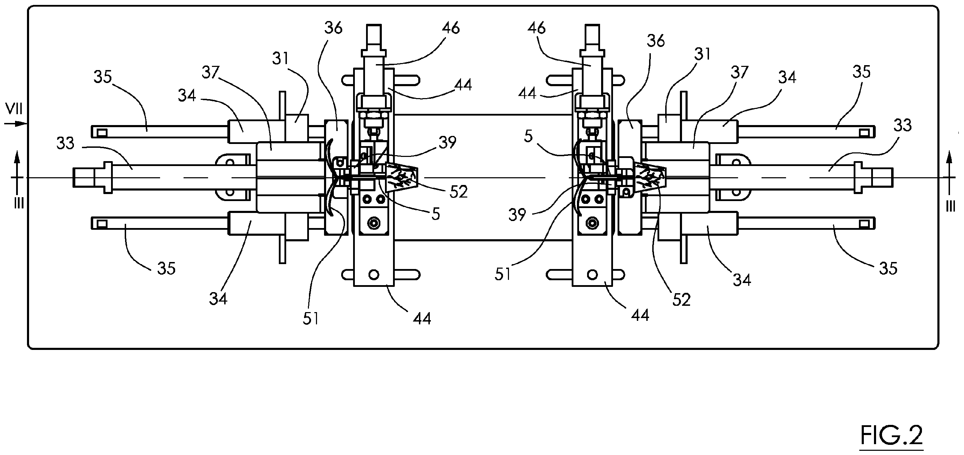

Fig 2 shows Fig 1 in plan view.

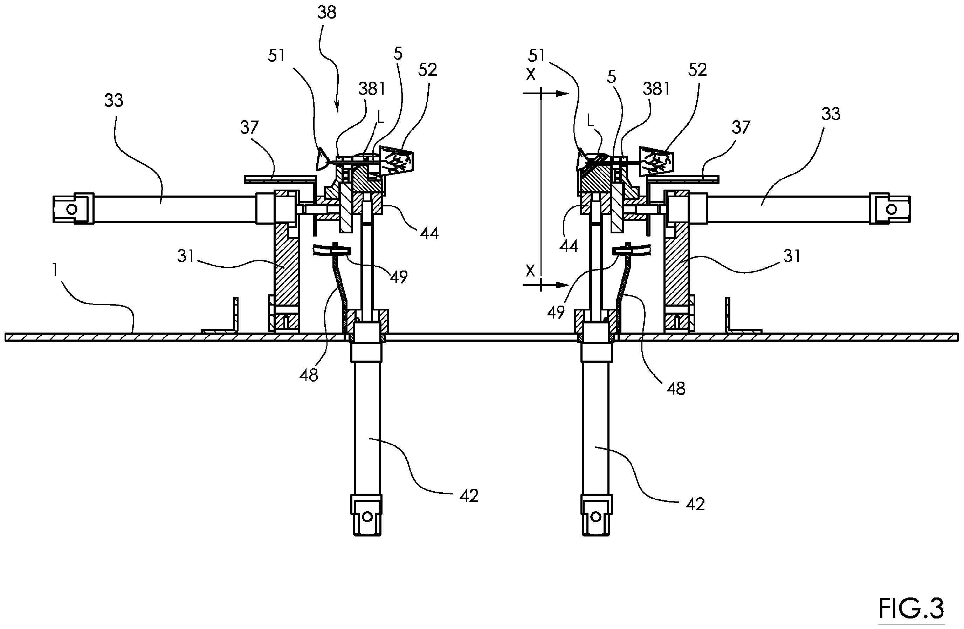

Fig 3 shows the section III-III of Fig 2.

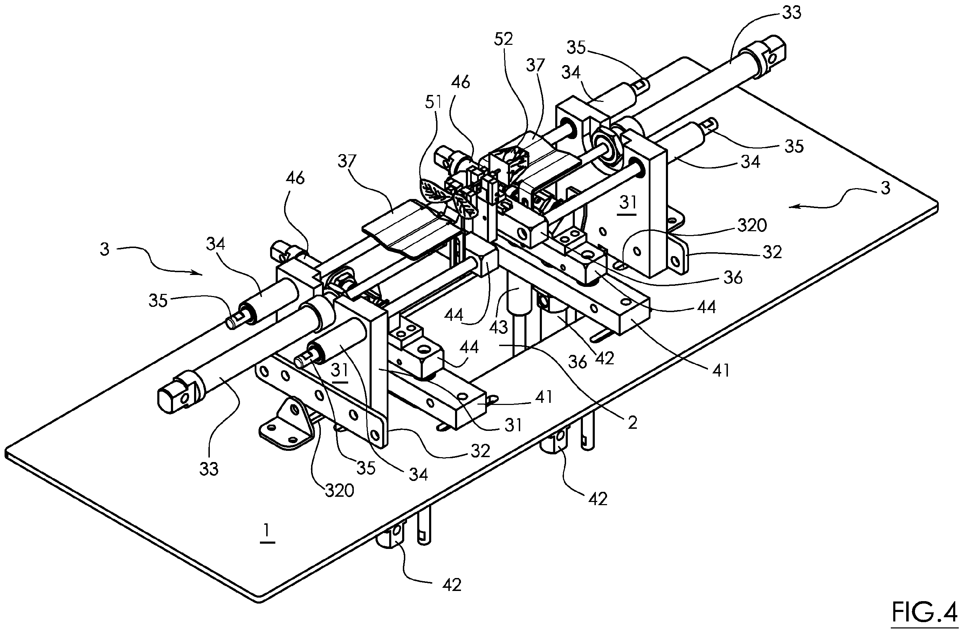

Fig 4 shows the invention in perspective view in a second operating position.

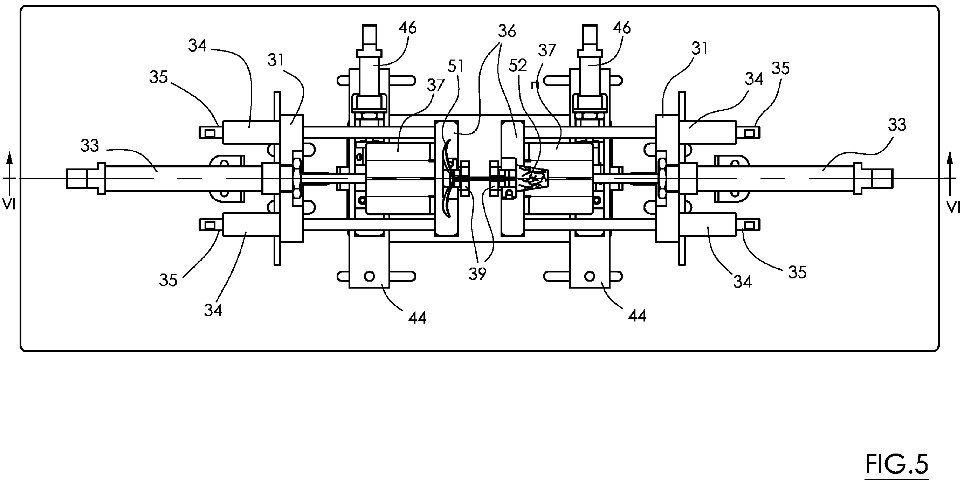

Fig 5 shows the Fig 4 in plan view.
Fig 6 shows the section VI-VI of Fig 5.

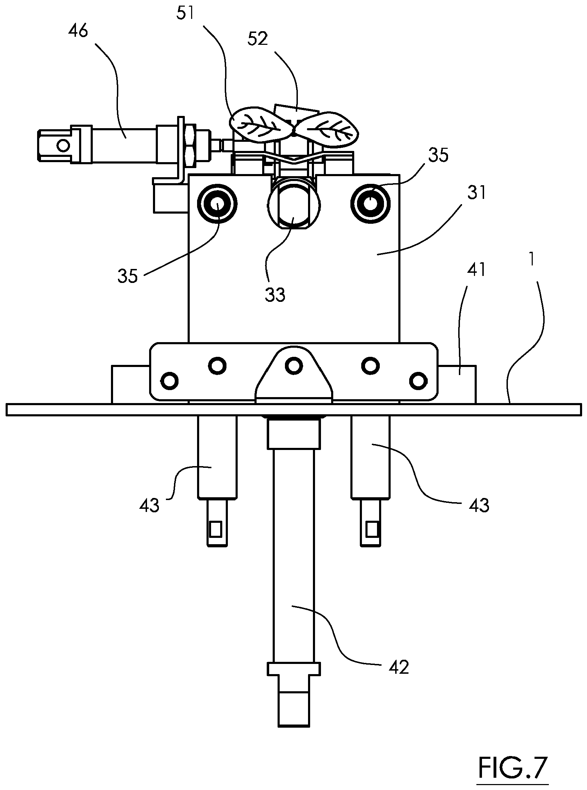

Fig 7 shows the view from VII of Fig 2.
Figs 8a and 8b show in perspective view one of the cradles for receiving the plant.
Fig 9 is the section IX-IX of Fig 6.
Fig 10 is the section X-X of Fig 3.

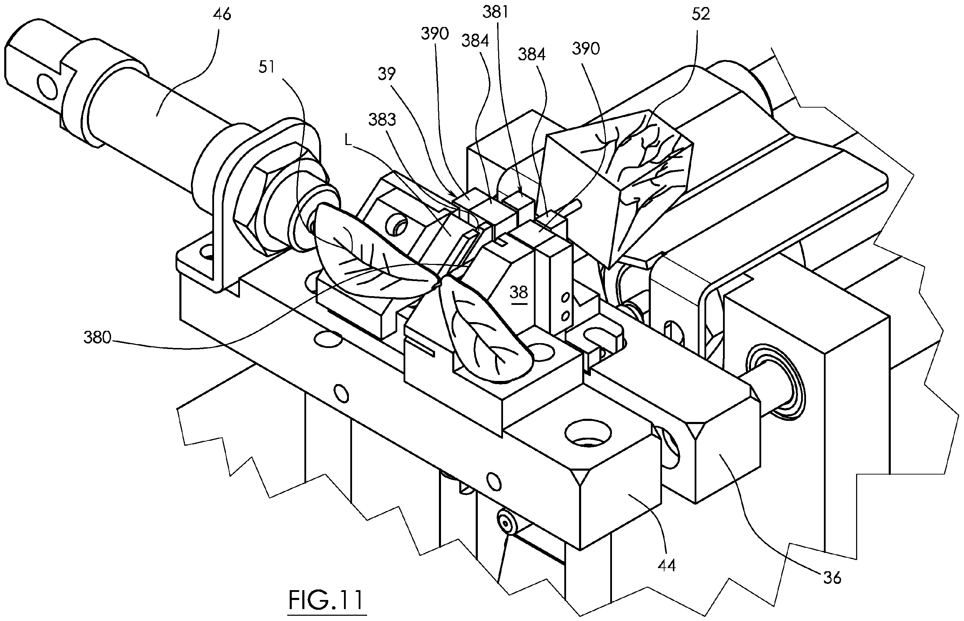

Fig 11 illustrates an enlarged view of a portion of Fig 1.

The figures show that the machine comprises a planar base 1, p, resting on the ground by means of feet (not illustrated).

The planar base 1 is provided with a central opening 2 arranged above a container, not illustrated, for collecting the cut portions of plants, as clarified hereinafter.

On the planar base 1, at the sides of the opening 2, there are arranged two identical perfectly symmetric devices 3 only one of which will be described in detail.

Each device 3 comprises a vertical wall 31, which is fixed during the operation of the machine, and whose position with respect to the symmetric wall of the other device can be adjusted by sliding and fixing the support 31 in special slots of the plane 1.

The wall 31 comprises an upper cylinder-piston unit 33, supported by two guide sleeves 34.

The stems 35 which carry a first mobile crosspiece 36 arranged on the other side of the wall 31 with respect to the cylinder-piston unit 33 slide in the sleeves 34.

The first mobile crosspiece 36 is fixed to the stem of the cylinder-piston unit 33.

A dihedron-shaped sheet apron 37 is fixed on the first mobile crosspiece 36 in central position facing upwards.

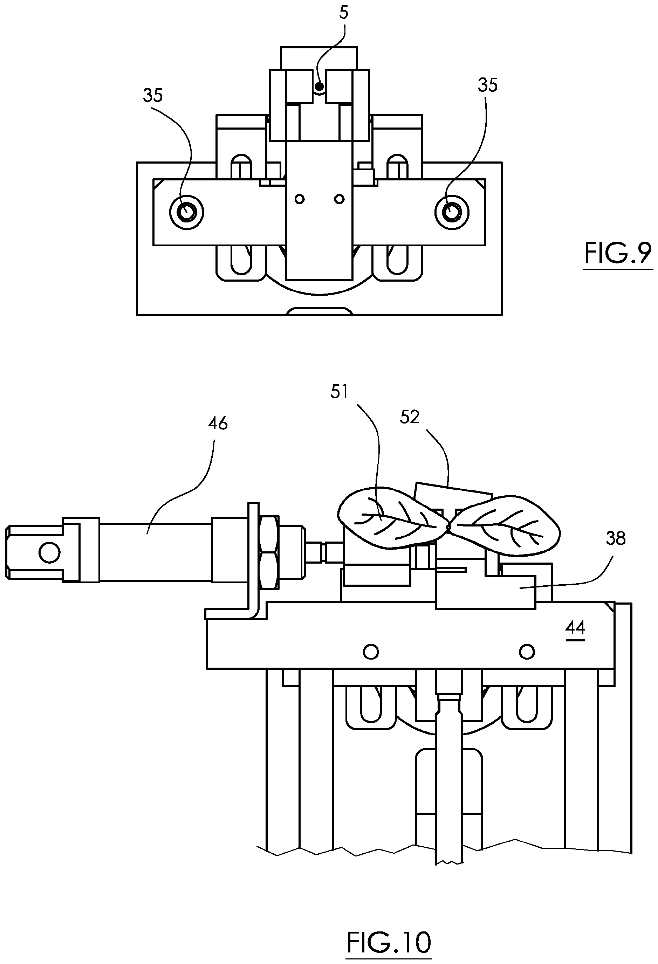

The first mobile crosspiece 36 carries a fork 381 open upwards, (see Fig 9) whose axis is parallel to the stem of the cylinder-piston unit and whose walls are parallel and vertical.

The first mobile crosspiece forms a means for supporting a gripper 39, which is arranged before the fork 381. The gripper 39 is provided with two pneumatic actuation jaws 390 which have the function of gripping and holding the stem during the entire grafting operation, as described hereinafter.

Opposite the wall 31, on the side of the central opening 2, a beam 41 is fixed to the plane 1, at an adjustable distance from the wall 31.

The beam 41 supports, in central position, a cylinder-piston unit 42 with the stem facing upwards.

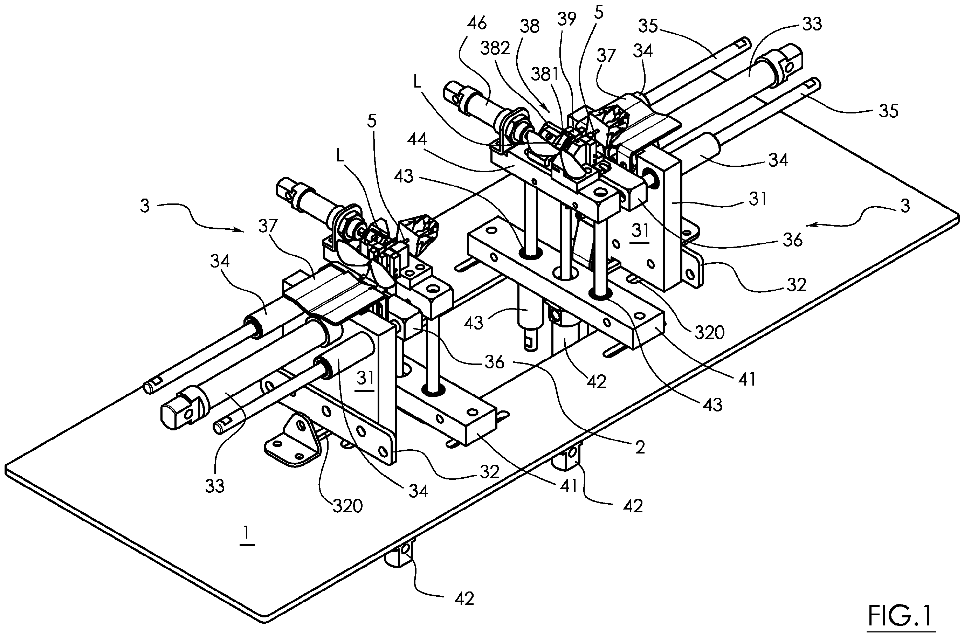

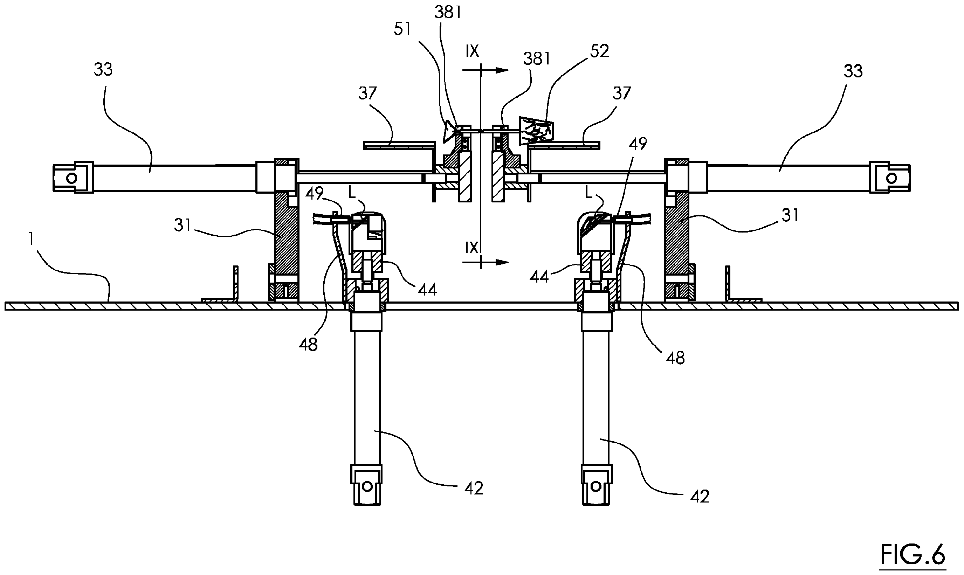

The beam 41 also comprises two sleeves 43 arranged on the sides of the cylinder-piston unit, within which there are guided two stems at whose top part there is fixed a second crosspiece 44. The mobile crosspiece 44 may translate vertically due to the cylinder-piston unit 42 between a raised position illustrated in Fig 1 and a lowered position illustrated in Fig 6.

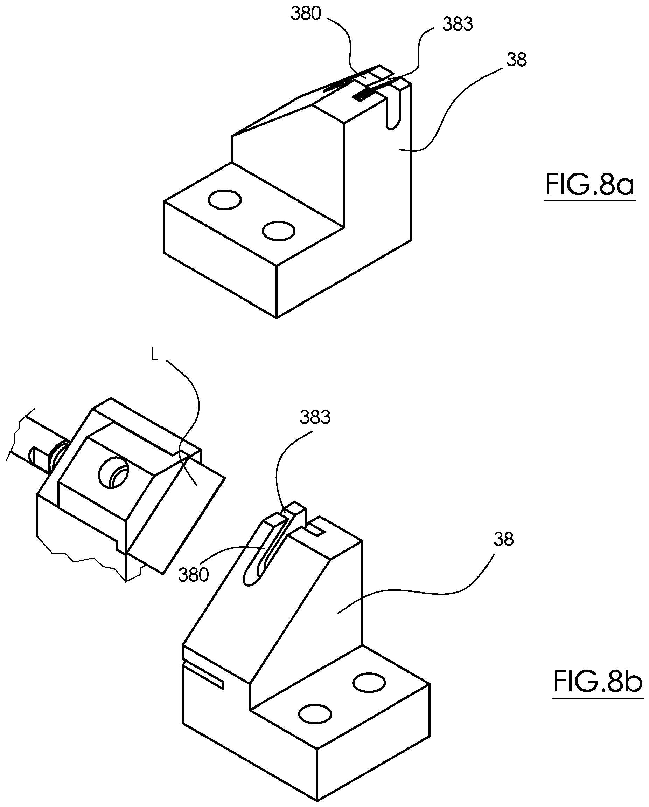

The second mobile crosspiece 44 carries - at the centre - a cradle 38, provided with a U-shaped opening 380 facing upwards. In particular, when the cylinder-piston unit 33 is in retracted position and the cylinder-piston unit 42 is in extended position, the opening 380 of the cradle is before the gripper 39 and at the fork 381 (see Fig 8 and Fig 10).

More in detail, when the second mobile crosspiece 44 is in raised position, the walls of the opening 380 of the cradle 38 are perfectly aligned with the arms 384 of the fork 381.

The cradle 38 has a slot 383 within which there slides a blade L whose function is that of cutting the stem received in the cradle. Preferably the blade L lies in an inclined position with respect to the vertical longitudinal plane of the cradle 38.

The actuation of the blade L is carried out by a cylinder-piston unit 46 arranged on the side of the cradle 38 and fixed to the second mobile crosspiece 44 and whose stem carries the sharp blade L adapted to be inserted into the cradle through the slot 383, lateral in the illustrated embodiment, present on one side of the cradle 38, in inclined position with respect to the vertical plane.

At the centre of the fixed beam 41, a nozzle 49 adapted to control-spray a disinfecting liquid jet facing towards the blade 47 when the second mobile crosspiece 44 is lowered, is fixed to a vertical arm 48.

The operation of the machine is described below starting from the rest position of the machine illustrated in Fig 1.

On each of the devices 3 there is positioned a plant 5 placing the leaves 51 or the root mass 52 thereof on the apron 37 and inserting the stem between the arms 384 of the fork 381 and in the opening 380 of the cradle 38.

The two plants are both oriented in the same manner, in a manner such that the leaves of a plant are faced towards the root mass of the other plant, and are positioned above the opening 2.

After positioning the plants there are actuated the grippers 39 so that the jaws 390 grip the stem of the respective plants. At this point there occurs the operation of cutting the stems of the plants by actuating the cylinder-piston units 46, which respectively separate - from the respective stems - the root mass of a plant and the leaves of the other plant, which fall through the opening 2 into the underlying collection container (not illustrated).

After cutting, the second mobile crosspiece 44 is lowered to be moved in the position of Fig 6, while the first mobile crosspiece 36 is advanced towards the symmetric device 3.

Thus the two stubs of stem of the stems, which are aligned, are made to perfectly fit and the grafting is completed by applying a binding element (not illustrated) by the operator.

When the second mobile crosspiece 44 is in the position of Fig 6, there are activated the nozzles 49 of each device 3 which first and foremost blow air into the seat with the blade retracted for eliminating any machining residue. At this point the blade 47 is carried in cutting position, and then sprays the disinfecting liquid and once again blows air for a long period of time so as to also clean the seat of the cradle upon the retraction of the blade once again.

After removing the grafted plant the machine returns to the configuration illustrated in Fig 1 and the cycle is repeated once again.

Obviously, the invention may be subjected to variants and improvements without departing from the scope of protection of the following claims.

## Claims

1. Automatic grafting machine comprising a base (1) supporting a first and a second device (3), each device (3) comprising a cradle (38) adapted to receive a stem of a plant, **characterized in that** said cradle (38) has a slot (383) adapted to receive a blade (L) for cutting the stem.

2. Machine according to claim 1, **characterised in that** each device comprises a gripper (39) for gripping the stem.

3. Machine according to claim 1, **characterised in that** said gripper is associated to moveable support means adapted to make the surfaces of the cut stems fit perfectly, in a manner such to provide the grafting, said support means being aligned and moveable with the respective grippers on the same axis.

4. Machine according to claim 3, **characterised in that** said support means comprise a horizontally mobile crosspiece supporting a fork (381) for receiving the stem aligned to said gripper.

5. Machine according to claim 1, **characterised in that** said cradle is associated to a second vertically mobile crosspiece between a first raised position wherein the cradle receives said stem, and a lowered position wherein the cradle is distant from said stem.

6. Automatic machine according to claim 5 **characterised in that** on said second mobile crosspiece there are associated means for actuating the cutting blade.

7. Machine according to claim 6, **characterised in that** the cutting means comprise a cylinder-piston unit fixed to the second vertically mobile crosspiece, whose stem carries a blade adapted to be inserted into said slot.

8. Machine according to claim 1, **characterised in that** said lateral slot and said cutting blade are inclined with respect to the vertical plane.

9. Automatic machine according to claim 5 **characterised in that** the base comprises a nozzle, for dispensing a disinfecting liquid, which is positioned opposite and facing towards the cutting blade when the second vertically mobile crosspiece is in lowered position.

10. Machine according to claim 1, **characterised in that** between said device there is arranged a central opening (2) on the base.

## Patentansprüche

1. Automatische Pfropfmaschine, umfassend eine Basis (1), die eine erste und a zweite Vorrichtung (3) trägt, jede Vorrichtung (3) umfassend eine Aufnahme (38), die angepasst ist, einen Stiel einer Pflanze aufzunehmen, **dadurch gekennzeichnet, dass** die Aufnahme (38) einen Schlitz (383) hat, der angepasst ist, um eine Klinge (L) zum Schneiden des Stiels aufzunehmen.

2. Maschine nach Anspruch 1, **dadurch gekennzeichnet, dass** jede Vorrichtung einen Greifer (39) zum Greifen des Stiels umfasst.

3. Maschine nach Anspruch 1, **dadurch gekennzeichnet, dass** der Greifer mit beweglichen Stützmitteln assozüert ist, die angepasst sind, damit die Flächen der geschnittenen Stiele auf eine Weise perfekt passen, dass das Pfropfen bereitgestellt wird, wobei die Stützmittel mit den jeweiligen Greifern auf derselben Achse ausgerichtet und damit beweglich sind.

4. Maschine nach Anspruch 3, **dadurch gekennzeichnet, dass** die Stützmittel ein horizontal mobiles Querstück umfassen, das eine Gabel (381) zum Aufnehmen des mit dem Greifer ausgerichteten Stiels trägt.

5. Maschine nach Anspruch 1, **dadurch gekennzeichnet, dass** die Aufnahme mit einem zweiten vertikal mobilen Querstück zwischen einer ersten angehobenen Position, in der die Aufnahme den Stiel aufnimmt, und einer abgesenkten Position, in der die Aufnahme vom Stiel entfernt ist, assozüert ist.

6. Automatische Maschine nach Anspruch 5 **dadurch gekennzeichnet, dass** am zweiten mobilen Querstück Mittel zum Betätigen der Schneideklinge assozüert sind.

7. Maschine nach Anspruch 6, **dadurch gekennzeichnet, dass** die Schneidemittel eine Zylinder-Kolben-Einheit umfassen, die am zweiten vertikalen mobilen Querstück befestigt sind, dessen Stiel eine Klinge trägt, die angepasst ist, um in den Schlitz eingeführt zu werden.

8. Maschine nach Anspruch 1, **dadurch gekennzeichnet, dass** der seitliche Schlitz und die Schneideklinge in Bezug auf die vertikale Ebene geneigt sind.

9. Automatische Maschine nach Anspruch 5 **dadurch gekennzeichnet, dass** die Basis eine Düse zum Ausgeben einer desinfizierenden Flüssigkeit umfasst, die gegenüber der und zeigend zur Schneideklinge positioniert ist, wenn das zweite vertikale mobile Querstück in der abgesenkten Position ist.

10. Maschine nach Anspruch 1, **dadurch gekennzeichnet, dass** zwischen der Vorrichtung eine mittlere Öffnung (2) auf der Basis angeordnet ist.

## Revendications

1. Appareil de greffe automatique comprenant une base (1) supportant un premier et un second dispositif (3), chaque dispositif (3) comprenant un support (38) conçu pour recevoir la tige d'une plante, **caractérisé en ce que** ledit support (38) dispose d'une fente (383) conçue pour recevoir une lame (L) destinée à couper la tige.

2. Appareil selon la revendication 1, **caractérisé en ce que** chaque dispositif comprend une pince (39) destinée à saisir la tige.

3. Appareil selon la revendication 1, **caractérisé en ce que** ladite pince est associée à des moyens de support mobiles conçus pour rendre les surfaces des tiges coupées parfaitement adaptées, en vue de la greffe, lesdits moyens de support étant alignés et mobiles par rapport aux pinces correspondantes sur le même axe.

4. Appareil selon la revendication 3, **caractérisé en ce que** lesdits moyens de support comprennent une traverse horizontalement mobile supportant une fourche (381) destinée à recevoir la tige alignée à ladite pince.

5. Appareil selon la revendication 1, **caractérisé en ce que** ledit support est associé à une seconde traverse verticalement mobile, pouvant passer d'une première position levée dans laquelle le support reçoit ladite tige, à une seconde position baissée dans laquelle le support est éloigné de ladite tige.

6. Appareil automatique selon la revendication 5, **caractérisé en ce que** figurent sur ladite seconde traverse mobile des moyens associés permettant d'activer la lame de coupe.

7. Appareil selon la revendication 6, **caractérisé en ce que** les moyens de coupe comprennent une unité piston-cylindre fixée à la seconde traverse verticalement mobile, dont la tige comprend une lame conçue pour être insérée dans ladite fente.

8. Appareil selon la revendication 1, **caractérisé en ce que** ladite fente latérale et ladite lame de coupe sont inclinées par rapport au plan vertical.

9. Appareil automatique selon la revendication 5, **caractérisé en ce que** la base comprend un embout conçu afin de distribuer un liquide désinfectant, situé du côté opposé et en face de la lame de coupe lorsque la seconde traverse verticalement mobile est en position baissée.

10. Appareil selon la revendication 1, **caractérisé en ce qu'**entre ledit dispositif est agencée une ouverture centrale (2) sur la base.
